# EUROPEAN PATENT APPLICATION

(11) **EP 3 499 147 A1**
(43) Date of publication of application: **19.06.2019**
(21) Application number: 17865277.2
(22) Date of filing: 10.10.2017
(51) Int. Cl.: F25B 1/00

(54) **REFRIGERATION DEVICE, REFRIGERATION SYSTEM**

(30) Priority: 31.10.2016 JP 2016213255
(71) Applicant: Mitsubishi Heavy Industries Thermal Systems, Ltd., Tokyo 108-8215 (JP)
(72) Inventor: MURAKAMI, Kenichi, Tokyo 108-8215 (JP); KAWANISHI, Akio, Tokyo 108-8215 (JP); ICHIGAYA, Kenta, Tokyo 108-8215 (JP); IKEDA, Masaki, Tokyo 108-8215 (JP)
(74) Representative: Cabinet Beau de Loménie
(86) International application number: PCT/JP2017/036584
(87) International publication number: WO 2018/079238

(57) **Abstract**

This refrigeration device is provided with: a heat exchanger (32) which condenses a refrigerant compressed in a compressor (31); a receiver (34) which separates, into a gas refrigerant (RG) and a liquid refrigerant (RL), the refrigerant condensed in an expansion valve (33) for expanding a refrigerant condensed in the heat exchanger (32); an injection circuit (38) which sends the gas refrigerant (RG) separated in the receiver (34) to the compressor (31); and a controller (100) which, in the case that a level sensor (342) detects that the level of the liquid refrigerant (RL) stored in the receiver (34) has reached a reference level, performs control so as to lower the rotation speed of the compressor (31).

## Description

### Technical Field

The present invention relates to a refrigeration device and a refrigeration system.

Priority is claimed on Japanese Patent Application No. 2016-213255, filed October 31, 2016, the content of which is incorporated herein by reference.

### Background Art

For example, in stores or the like, a plurality of refrigerating and freezing devices, such as a refrigerator, a freezer, and a showcase, which store or display goods, such as food and a drink, in a refrigerated state or frozen state, are used. The plurality of refrigerating and freezing devices receive supply of a low-temperature low-pressure liquid refrigerant from a separately provided condensing unit. Each refrigerating and freezing device cools goods by supplying the liquid refrigerant to an internal heat exchanger.

The condensing unit is a so-called refrigeration device. The condensing unit includes a compressor, a cooler (gas cooler), an expansion valve, and a receiver (gas-liquid separator). In the condensing unit, the refrigerant warmed by the external refrigerating and freezing device is compressed by the compressor. The compressed refrigerant is expanded in the expansion valve and turned into a low-pressure low-temperature refrigerant after being cooled in the cooler. The refrigerant brought into a gas-liquid two-phase state through the expansion valve is separated into a gaseous phase (gas refrigerant) and a liquid phase (liquid refrigerant) by the receiver. The separated liquid refrigerant is supplied to the external refrigerating and freezing device. On the other hand, the separated gas refrigerant is sent into the compressor and compressed again.

In the refrigerating and freezing device to which the liquid refrigerant is supplied from the condensing unit, the control of adjusting a cooling temperature at which goods are actually cooled is individually performed in accordance with a set temperature. For this reason, the refrigerating and freezing device includes an adjusting valve that adjusts the amount of the refrigerant to be supplied to each heat exchanger, and a controller that controls an opening degree of the adjusting valve. In the refrigerating and freezing device, when the cooling temperature reaches the set temperature, the adjusting valve is closed by the controller to reduce the amount of supply of the refrigerant to the heat exchanger.

By adjusting the amount of the refrigerant with the refrigerating and freezing device, the amount of the refrigerant to be supplied from the condensing unit to the refrigerating and freezing device fluctuates. For example, the liquid level of the liquid refrigerant within the receiver rises as the amount of the refrigerant to be supplied from the condensing unit to the refrigerating and freezing device decreases. As a result, there is a possibility that the liquid refrigerant is mixed into the gas refrigerant sent into the compressor from the receiver. Moreover, in a case where the liquid refrigerant is mixed into the gas refrigerant, there is a possibility that the mixed liquid refrigerant is mixed with lubricant oil within the compressor, and lubrication performance degrades. Hence, if the liquid refrigerant is sent into the compressor in large quantities, there is also a possibility that this leads to a failure of the compressor. For this reason, it is necessary to restrain sending the liquid refrigerant into the compressor.

In contrast, for example, it is also considered that an operational state on the condensing unit side is controlled in accordance with the opening degree of the adjusting valve in the refrigerating and freezing device. However, the condensing unit described above is not necessarily provided as an integral system together with the plurality of refrigerating and freezing devices, and the condensing unit is often provided to customers as single body apart from the refrigerating and freezing devices. For this reason, in the condensing unit, it is difficult to perform a control in conjunction with the refrigerating and freezing devices side, which may lead to a cost rise.

Moreover, PTL 1 discloses a configuration including a bypass line for gas injection that causes the gas refrigerant separated from the liquid refrigerant to flow back to the compressor, and a bypass valve provided in the bypass line. In this configuration, when the liquid height of the liquid refrigerant within the gas-liquid separator exceeds a reference height, the amount of the liquid refrigerant sucked out to the compressor is directly restrained by closing the bypass valve connected to the compressor.

### Citation List

### Patent Literature

[PTL 1] Japanese Unexamined Patent Application Publication No. 11-142001

### Summary of Invention

### Technical Problem

However, if the bypass valve is closed as in the configuration shown in PTL 1, the amount of supply of a cooling gas to be supplied to the compressor also decreases in a case of the condensing unit. As a result, there is a possibility that the temperature of a discharge gas of the compressor becomes a high temperature, and the reliability of the compressor decreases. Therefore, it is desired to restrain sending the liquid refrigerant into the compressor from the receiver while restraining a rise in the temperature of the discharge gas of the compressor.

The invention provides a refrigeration device and a refrigeration system that can restrain sending a liquid refrigerant into a compressor from a receiver while restraining a rise in the temperature of a discharge gas of the compressor.

### Solution to Problem

A refrigeration device related to a first aspect of the invention includes a compressor that compresses a refrigerant; a heat exchanger that condenses the refrigerant compressed in the compressor; an expansion valve that expands the refrigerant condensed in the heat exchanger; a receiver that separates the refrigerant condensed in the expansion valve into a gas refrigerant and a liquid refrigerant; an injection circuit that sends the gas refrigerant separated in the receiver to the compressor; a liquid level sensor that detects that a liquid level of the liquid refrigerant stored within the receiver has reached a predetermined reference level; and a controller that performs a control so as to lower a rotation speed of the compressor in a case where the liquid level sensor detects that the liquid level has reached the reference level.

According to such a configuration, in a case where the liquid level of the liquid refrigerant within the receiver has reached the reference level, the amount of the refrigerant to be discharged from the compressor can be restrained by lowering the rotation speed of the compressor. Accordingly, an increase in the liquid refrigerant within the receiver can be restrained. As a result, it is possible to restrain sending the liquid refrigerant into the compressor from the receiver together with the gas refrigerant. Additionally, by controlling the rotation speed of the compressor, the discharge gas of the compressor can be cooled with a cooling gas sent into the compressor from the receiver, and the reliability can be ensured.

In the refrigeration device related to a second aspect of the invention based on the first aspect, in a case where the liquid level sensor detects that the liquid level has reached the reference level, the controller may perform a control so as to lower the rotation speed of the compressor in a predetermined percentage with respect to the rotation speed at the time of the detection.

According to such a configuration, by lowering the rotation speed of the compressor at a time in the predetermined percentage with respect to the rotation speed at a time of the detection, the liquid level within the receiver can be lowered through a simple control without adjusting the complicated rotation speed by the controller.

In the refrigeration device related to a third aspect of the invention based on the first aspect or the second aspect, the controller may further lower the rotation speed of the compressor in a case where the liquid level is maintained in a state of having reached the reference level in the liquid level sensor when a predetermined setup time has elapsed since the rotation speed of the compressor is lowered.

By adopting such a configuration, a case where the liquid level has not fallen even if the rotation speed of the compressor is lowered can be exactly determined. Accordingly, the liquid level can be lowered with high accuracy.

In the refrigeration device related to a fourth aspect of the invention based on any one of the first aspect to the third aspect, the controller may lower the rotation speed of the compressor in a case where a pressure of the refrigerant to be supplied to the compressor is equal to or higher than a preset pressure target value and the liquid level sensor detects that the liquid level has reached the reference level.

By adopting such a configuration, in a case where the pressure of the refrigerant to be supplied to the compressor is high and the liquid refrigerant tends to accumulate in the receiver, the liquid level can be effectively lowered.

The refrigeration device related to a fifth aspect of the invention based on any one of the first aspect to the fourth aspect may further include a lower liquid level sensor, which detects the liquid level of the liquid refrigerant within the receiver, below the liquid level sensor, and the controller may lower the rotation speed of the compressor on the basis of an elapsed time until the liquid level sensor detects that the liquid level has reached the reference level since the lower liquid level sensor detects the liquid level.

By adopting such a configuration, the liquid level of the liquid refrigerant within the receiver can be ascertained with high accuracy. Accordingly, a rise in the liquid level within the receiver can be restrained with high accuracy.

In the refrigeration device related to a sixth aspect of the invention based on the fifth aspect, when the elapsed time is shorter than a predetermined reference time, a percentage at which the rotation speed of the compressor is lowered may be increased, or the compressor may be stopped.

By adopting such a configuration, in a case where the liquid level of the liquid refrigerant within the receiver changes steeply, the liquid level can be greatly lowered in correspondence with the rise in the liquid level.

A refrigeration system related to a seventh aspect of the invention includes the refrigeration device of any one of the first aspect to the ninth aspect; and a loading apparatus that is connected to the refrigeration device and has a load-side heat exchanger that exchanges heat with the liquid refrigerant to be supplied from the refrigeration device.

### Advantageous Effects of Invention

According to the invention, it is possible to restrain sending the liquid refrigerant into the compressor from the receiver while restraining a decrease in cooling capacity.

### Brief Description of Drawings

Fig. 1 is a schematic view illustrating a configuration of a refrigeration system and a refrigeration device related to an embodiment of the invention.
Fig. 2 is a view illustrating a circuit configuration of the above refrigeration device.
Fig. 3 is a sectional view illustrating a receiver that constitutes the above refrigeration device.
Fig. 4 is a view illustrating an aspect in which a rotation speed of a compressor is changed in accordance with changes in pressure of a refrigerant in the above refrigeration device.
Fig. 5 is a flowchart illustrating a flow in which the rotation speed of the compressor is controlled in accordance with a liquid level of the receiver in the above refrigeration device.
Fig. 6 is a view illustrating a modification example of the refrigeration device related to the above embodiment.

### Description of Embodiments

Hereinafter, embodiments for carrying out a refrigeration device and a refrigeration system according to the invention will be described with reference to the accompanying drawings. However, the invention is not limited only to these embodiments.

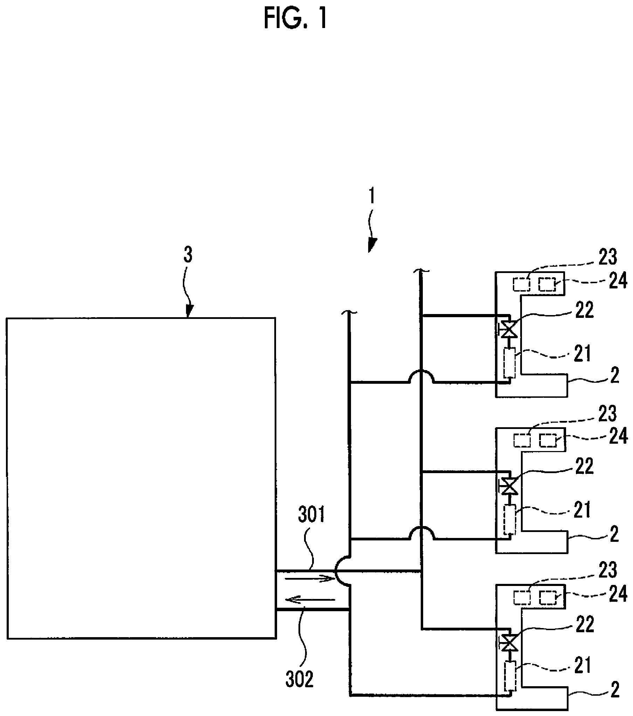

As illustrated in Fig. 1, a refrigeration system 1 of the present embodiment includes a plurality (three in the present embodiment) loading apparatuses 2, and a condensing unit (refrigeration device) 3. In the present embodiment, the refrigeration system uses CO2 (carbon dioxide) 1 as a refrigerant.

Each loading apparatus 2 is a refrigerating and freezing device, such as a refrigerator or a freezer, which cools or refrigerates and store goods and a showcase that cools or refrigerates and displays goods. The loading apparatus 2 receives supply of a liquid refrigerant from the condensing unit 3. The loading apparatus 2 includes a heat exchanger (load-side heat exchanger) 21, a control valve (adjusting valve) 22, a loading apparatus controller 23, and a temperature sensor 24.

The heat exchanger 21 exchanges heat with the liquid refrigerant supplied from the condensing unit 3, thereby cooling goods. The heat exchanger 21 returns the refrigerant after the heat exchange to the condensing unit 3.

The control valve 22 adjusts the flow rate of the liquid refrigerant supplied from the condensing unit 3, thereby adjusting the cooling temperature of goods.

On the basis of a set temperature set from the outside and a cooling temperature which is detected by the temperature sensor 24 and at which goods are actually cooled, the loading apparatus controller 23 adjusts the opening degree of the control valve 22 such that the internal cooling temperature approaches the set temperature.

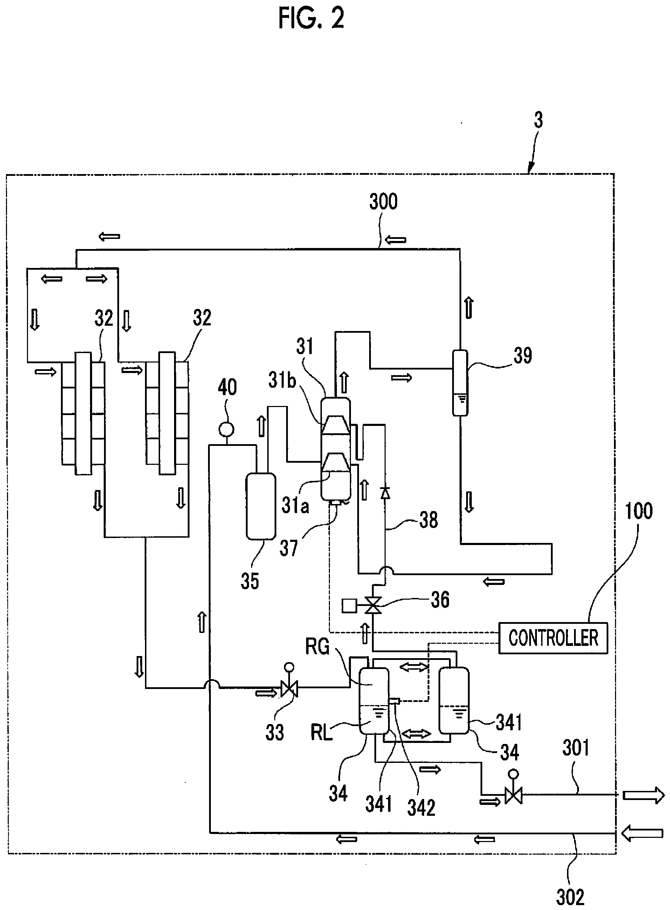

As illustrated in Fig. 2, the condensing unit 3 mainly includes a compressor 31, a gas cooler (heat exchanger) 32, an electronic expansion valve (expansion valve) 33, a receiver 34, a controller 100, an injection circuit 38, an oil separator 39, and a pressure sensor 40. The compressor 31, the gas cooler 32, the electronic expansion valve 33, the receiver 34, and the oil separator 39 are coupled to each other by a refrigerant pipe 300.

The compressor 31 compresses the refrigerant supplied via an accumulator 35 by a suction pipe 302 from the loading apparatus 2. The compressor 31 discharges a high-pressure high-temperature refrigerant. In the present embodiment, CO2 having a larger compression ratio than fluorocarbon or the like is used as the refrigerant. The compressor 31 is a two-stage compressor having a first-stage first compression section 31a, and a second-stage second compression section 31b. The compressor 31 has a temperature sensor 37 that detects the temperature of the refrigerant liquid and oil in the first compression section 31a of the compressor 31.

The high-pressure high-temperature refrigerant is supplied to the gas cooler 32 via the oil separator 39 after being discharged from the compressor 31. The gas cooler 32 exchanges heat with the supplied high-pressure high-temperature refrigerant and the air sent by a blower (not illustrated), and condenses the refrigerant. In the present embodiment, a plurality of (two in the present embodiment) the gas coolers 32 are provided in parallel. The oil separator 39 recovered the lubricant oil included in the refrigerant, respectively, and returns the lubricant oil to the compressor 31.

The electronic expansion valve 33 expands the refrigerant condensed in each gas cooler 32, and produces a low-pressure low-temperature refrigerant. The refrigerant expanded in the electronic expansion valve 33 is brought into a gas-liquid two-phase state.

The receiver 34 separates the refrigerant in the gas-liquid two-phase state expanded in the electronic expansion valve 33 into a gas refrigerant RG that is a gaseous-phase refrigerant, and a liquid refrigerant RL that is a liquid-phase refrigerant. In the present embodiment, a plurality of (two in the present embodiment) the receivers 34 are provided in parallel. Each receiver 34 has a tank 341 that contains the refrigerant in the gas-liquid phase state. A liquid sending pipe 301 and the injection circuit 38 are connected to the tank 341. The liquid refrigerant RL separated within the tank 341 is supplied to each external loading apparatus 2 through the liquid sending pipe 301.

Additionally, the gas refrigerant RG separated within the tank 341 of the receiver 34 is suctioned into the compressor 31 via the injection circuit 38. In the present embodiment, the injection circuit 38 is connected to the second compression section 31b of the compressor 31. The injection circuit 38 supplies the gas refrigerant RG within the tank 341 to the second compression section 31b.

The injection circuit 38 is provided with an electromagnetic valve 36. The opening degree of the electromagnetic valve 36 is adjusted in accordance with the temperature of the refrigerant liquid and the oil detected in the temperature sensor 37, by the control of the controller 100. By opening and closing the electromagnetic valve 36, the flow rate of the gas refrigerant RG suctioned from the receiver 34 is adjusted.

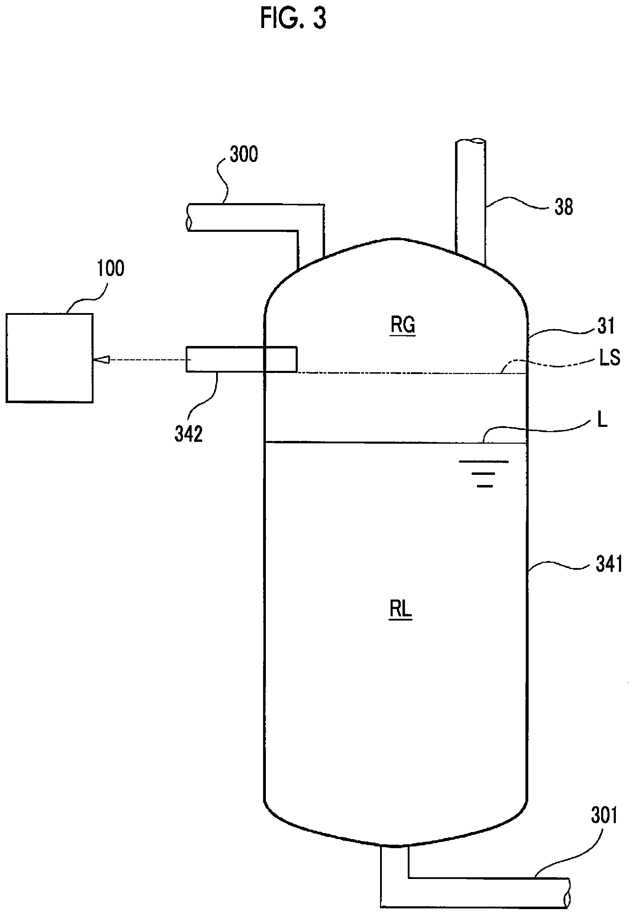

As illustrated in Fig. 3, a liquid level L of the liquid refrigerant RL within each tank 341 fluctuates in accordance with the operation conditions on the plurality of loading apparatuses 2 side. That is, if the cooling temperature is lowered so as to reach a set temperature individually set on each loading apparatus 2 side, the amount of the liquid refrigerant RL to be used for the loading apparatus 2 increases. For that reason, the opening degree of the control valve 22 is large, and the amount of the liquid refrigerant RL to be sent into the loading apparatus 2 from the tank 341 increases. As a result, the amount of the liquid refrigerant RL stored within the tank 341 decreases, and the liquid level L tends to fall. That is, in a case where the cooling temperature has reached the set temperature on the loading apparatus 2 side, the amount of the liquid refrigerant RL to be used for the loading apparatus 2 decreases. For that reason, the control valve 22 is closed or the opening degree thereof is made small, and the amount of the liquid refrigerant RL to be sent into the loading apparatus 2 from the tank 341 decreases. As a result, the amount of the liquid refrigerant RL stored within the tank 341 increases, and the liquid level L within the tank 341 tends to rise.

At least one receiver 34 among the plurality of receivers 34 has a liquid level sensor 342 within the tank 341. The liquid level sensor 342 outputs a predetermined signal to the controller 100 in a case where the liquid refrigerant RL within the tank 341 has reached a predetermined reference level Ls. As the liquid level sensor 342, for example, an optical level switch can be used. The optical level switch includes a light-emitting part (not illustrated) that emits light toward a liquid surface of the liquid refrigerant RL within the tank 341, and a light-receiving part (not illustrated) that receives the reflected light of the light emitted in the light-emitting part from the liquid surface. In the optical level switch, if the liquid surface reaches the position of the reference level Ls, the light emitted in the light-emitting part is not reflected in the light-receiving part, and an output signal changes. Accordingly, the optical level switch detects that the liquid surface has reached the reference level Ls. Hence, in the present embodiment, if the liquid level L of the liquid refrigerant RL within the tank 341 has not reached the reference level Ls, the output signal from the liquid level sensor 342 to the controller 100 is OFF. Additionally, when the liquid level L has reached the reference level Ls, the output signal from the liquid level sensor 342 to the controller 100 is set to ON.

The pressure sensor 40 measures the pressure of the refrigerant to be supplied to the compressor 31 via the loading apparatus 2. The pressure sensor 40 outputs the measurement result to the controller.

The controller 100 controls the rotation speed of the compressor 31. The controller 100 of the present embodiment executes the control of the rotation speed of the compressor 31 in a case where the liquid level sensor 342 detects that the liquid level L has reached the reference level Ls. The controller 100 determines the liquid level L of the liquid refrigerant RL within the tank 341 on the basis of the output signal from the liquid level sensor 342. The controller 100 executes the control of lowering the rotation speed of the compressor 31 in a case where the liquid refrigerant RL within the tank 341 has reached the reference level Ls. Additionally, the controller 100 of the present embodiment executes the control of lowering the rotation speed of the compressor 31 not only on the basis of the liquid level L of the liquid refrigerant RL within the tank 341 but also on the basis of the measurement result input from the pressure sensor 40.

Next, the control contents in the controller 100 will be described in detail. The controller 100 starts the compressor 31 if the condensing unit 3 is started. The controller 100 operates the compressor 31 between a predetermined upper limit rotation speed and a predetermined lower limit rotation speed.

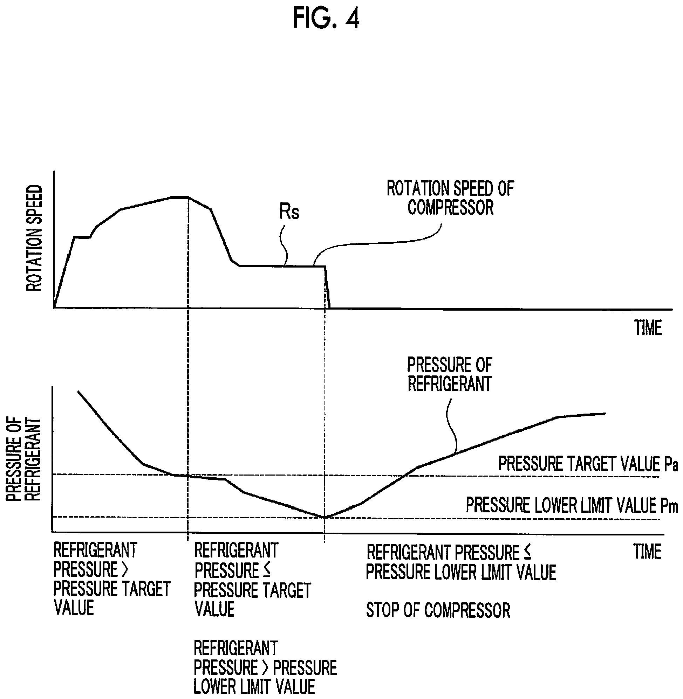

Additionally, as illustrated in Fig. 4, the controller 100 raises the rotation speed of the compressor 31 when the pressure of the refrigerant input from the pressure sensor 40 is equal to or higher than a predetermined pressure target value Pa. Accordingly, the pressure of the refrigerant to be supplied to the compressor 31 from the loading apparatus 2 decreases.

Additionally, in a case where the pressure of the refrigerant to be supplied to the compressor 31 has reached the pressure target value Pa, the controller 100 stops a rise in the rotation speed of the compressor 31, and is rotated at a predetermined steady rotation speed Rs.

The controller 100 stops the operation of the compressor 31 in a case where the pressure of the refrigerant to be supplied to the compressor 31 is equal to or lower than a predetermined pressure lower limit value Pm. As the compressor 31 stops, the pressure of the refrigerant rises gradually with the elapse of time.

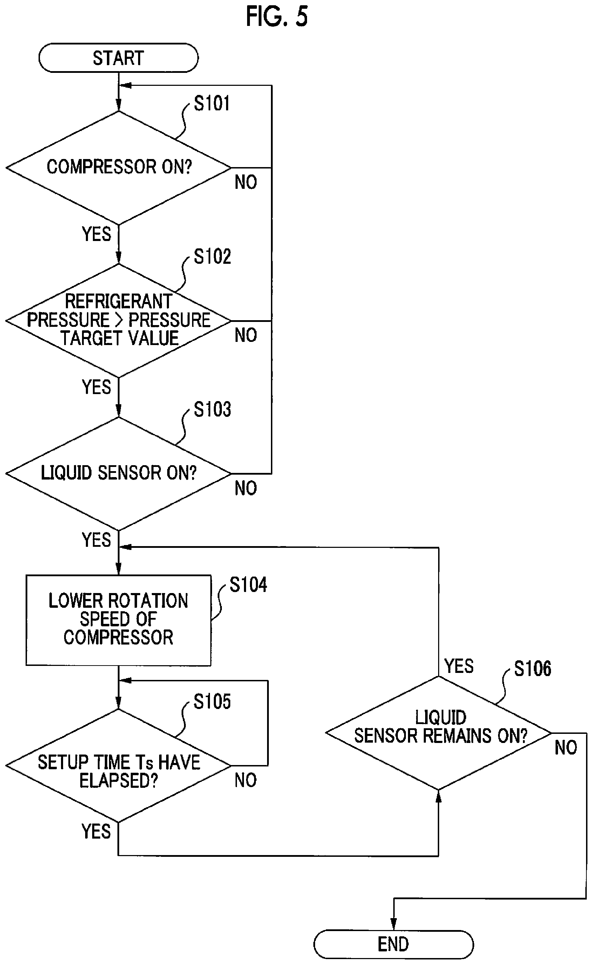

Next, the rotation speed control of the compressor 31 in the controller 100 based on the liquid level L of each receiver 34 will be described in detail. Specifically, as illustrated in Fig. 5, first, the controller 100 determines whether or not the compressor 31 is operating (Step S101). In a case where it is determined that the compressor 31 is not operating, the controller 100 repeats the determination of Step S101 whenever a predetermined time elapses.

After it is determined that the compressor 31 is operating, the controller 100 determines whether or not the pressure of the refrigerant to be supplied to the compressor 31 is equal to or higher than a predetermined target pressure value (Step S102). In a case where the pressure of the refrigerant to be supplied is equal to or lower than the target pressure value, the processing returns to Step S101.

In Step S102, in a case where the pressure of the refrigerant to be supplied to the compressor 31 is equal to or higher than the predetermined target pressure value, subsequently, the controller 100 determines whether or not the output signal from the liquid level sensor 342 is ON (Step S103). However, it is also assumed that the liquid level L shakes within the tank 341, and the output signal from the liquid level sensor 342 is temporarily set to ON. Hence, it is preferable that the controller 100 determines that the output signal from the liquid level sensor 342 is ON in a case where a state where the output signal from the liquid level sensor 342 is set to ON continues for a predetermined time, for example, 1 second to 5 seconds, preferably, for about 2 seconds is checked.

In a case where the output signal from the liquid level sensor 342 is OFF, this shows that the liquid level L within the tank 341 of the receiver 34 is lower than the reference level Ls. For that reason, in a case where the output signal from the liquid level sensor 342 is OFF, the processing returns to the Step S101.

In a case where the output signal from the liquid level sensor 342 is ON, the liquid level L within the tank 341 of the receiver 34 has reached the reference level Ls. The controller 100 proceeds to the rotation control processing the compressor 31 after Step S104 in a case where the output signal from the liquid level sensor 342 is ON in Step S103, that is, in a case where all conditions of Steps S101 to S103 are satisfied.

In Step S104 following Step S103, the controller 100 lowers the rotation speed of the compressor 31 (Step S104). In the present embodiment, in Step S104, the rotation speed of the compressor 31 is lowered by a predetermined percentage at a time with respect to a rotation speed at the time when it is determined that the rotation speed is lowered. The predetermined percentage is, for example, 1% to 10%, preferably 3% to 8%, and particularly preferably 5% particularly preferably.

After the rotation speed of the compressor 31 is lowered, the controller 100 causes the compressor 31 to continue its operation at the rotation speed until a preset predetermined setup time Ts elapses (Step S105). The setup time Ts is, for example, 1 second to 60 seconds, preferably, 10 seconds to 50 seconds, and particularly preferably about 30 seconds.

If the predetermined setup time Ts has elapsed, the controller 100 checks the output signal from the liquid level sensor 342 again, and determines whether or not the output signal remains ON (Step S106). If the output signal from the liquid level sensor 342 is switched to OFF, the liquid level L within the tank 341 is lower than the reference level Ls. In this case, the controller 100 causes the rotation speed of the compressor 31 to return to an original value.

However, it is also assumed that the liquid level L shakes within the tank 341, and the output signal from the liquid level sensor 342 is temporarily set to OFF. Hence, in a case where a state where the output signal from the liquid level sensor 342 is set to OFF continues for a predetermined time, for example, 1 second to 5 seconds, and preferably, about 2 seconds, it is preferable that it is determined that the output signal from the liquid level sensor 342 is switched to OFF.

On the other hand, in Step S106, if the output signal from the liquid level sensor 342 remains ON, the liquid level L within the tank 341 remains equal to or higher than the reference level Ls. In this case, the processing returns to Step S104 where the rotation speed of the compressor 31 is further lowered by a predetermined percentage.

In addition, in a case where the rotation speed of the compressor 31 is lowered in second or subsequent rounds in Step S104, the rotation speed of the compressor 31 at that time may be lowered in the same percentage (for example, 5%) as that in the first round. However, the invention is not limited to this. For example, the controller 100 may lower the rotation speed in a percentage different from that in the first round. In such a case, as the number of times by which the rotation speed of the compressor 31 is lowered is increased, the percentage in which the rotation speed is lowered may be increased or decreased.

Thereafter, the controller 100 repeats determination on standby of the elapse of the setup time Ts of Step S105 and determination on whether or not the liquid level sensor 342 of Step S106 remains ON until the liquid level L falls below the reference level Ls.

The controller 100 repeatedly executes the processing of Steps S101 to S106 as described above at every predetermined time during the operation of the compressor 31.

According to the above-described condensing unit 3 and the above-described refrigeration system 1, in a case the where liquid level L of the liquid refrigerant RL within the receiver 34 has reached the reference level Ls, the amount of the refrigerant to be discharged from the compressor 31 can be restrained by lowering the rotation speed of the compressor 31. Hence, the amount of the refrigerant to be supplied to the receiver 34 can be restrained, and an increase in the liquid refrigerant RL within the tank 341 can be restrained. Accordingly, it is possible to restrain that the liquid refrigerant RL within the tank 341 is excessively increased. As a result, it is possible to restrain sending the liquid refrigerant RL into the compressor 31 from the receiver 34 together with the gas refrigerant RG.

Additionally, by controlling the rotation speed of the compressor 31, the amount of the gas refrigerant RG to be supplied to a compressor 31 is not reduced as in a case where the refrigerant supply amount of the gas refrigerant RG from the receiver 34 to the compressor 31 is squeezed. Hence, the discharge gas of the compressor 31 can be cooled with the gas refrigerant RG, and the reliability of the compressor 31 can be ensured.

From these, by preventing an excessive rise in the liquid level of the liquid refrigerant in the receiver 34 while restraining a rise in the temperature of the discharge gas of the compressor 31, it is possible to restrain sending the liquid refrigerant RL into the compressor 31 from the receiver 34.

The above configuration is particularly effective in the condensing unit 3 that compresses carbon dioxide having a large pressure ratio as the refrigerant by the compressor 31 as in the present embodiment.

Additionally, the controller 100 lowers the rotation speed of the compressor 31 at a time in a predetermined percentage in a case where the liquid level sensor 342 detects that the liquid level L has reached the reference level Ls. Accordingly, the liquid level L within the receiver 34 can be lowered through a simple control without adjusting the complicated rotation speed by the controller 100.

Additionally, the controller 100 determines the liquid level L again and further lowers the rotation speed of the compressor 31 when the predetermined setup time Ts has elapsed since the rotation speed of the compressor 31 is lowered. By adopting such a configuration, a case where the liquid level L has not fallen even if the rotation speed of the compressor 31 is lowered can be exactly determined. Accordingly, the liquid level L can be lowered with high accuracy.

The controller 100 executes Steps S103 and S104 to lower the rotation speed of the compressor 31 in a case where the pressure of the refrigerant to be supplied to the compressor 31 from the loading apparatus 2 is equal to or higher than the preset pressure target value Pa. Accordingly, in a case where the pressure of the refrigerant to be supplied from the loading apparatus 2 to the compressor 31 is high and the liquid refrigerant RL tends to accumulate in the receiver 34, the liquid level L can be effectively lowered.

The controller 100 stops the compressor 31 in a case where the pressure of the refrigerant measured by the pressure sensor 40 is equal to or lower than the preset pressure lower limit value Pm. Accordingly, it is possible to restrain that the operation of the compressor 31 becomes unstable.

Additionally, the injection circuit 38 is adapted to send the gas refrigerant RG into the second compression section 31b of the compressor 31. Accordingly, the refrigerant compressed in the first compression section 31a and the gas refrigerant RG sent from the receiver 34 via the injection circuit 38 are supplied to the second compression section 31b. As a result, the pressure of the gas refrigerant RG discharged from the second compression section 31b can be lowered.

### (Modification Example of Embodiment)

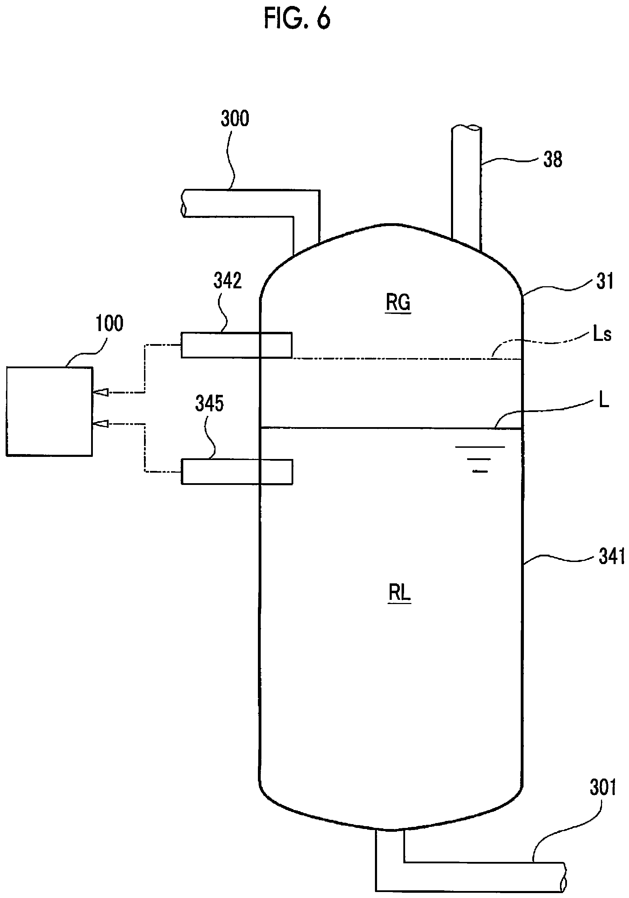

In addition, in the above embodiment, the receiver 34 includes the liquid level sensor 342 that detects that the liquid level L of the liquid refrigerant RL has reached the reference level Ls. However, a plurality of the liquid level sensors may be provided. For example, as illustrated in Fig. 6, a lower liquid level sensor 345 that detects the liquid level L of the liquid refrigerant RL within the tank 341 may be provided below the liquid level sensor 342.

In such a configuration, the controller 100 may lower the rotation speed of the compressor 31 on the basis of elapsed time until the liquid level sensor 342 detects that the liquid level L has reached the reference level Ls since the lower liquid level sensor 345 detects the liquid level L of the liquid refrigerant RL.

More specifically, for example, when the elapsed time until the liquid level sensor 342 detects that the liquid level L has reached the reference level Ls since the lower liquid level sensor 345 detects liquid level L of the liquid refrigerant RL is shorter than a predetermined reference time, the liquid level L of the liquid refrigerant RL rises rapidly within the receiver 34. In such a case, the controller 100 may increase a percentage in which the rotation speed of the compressor 31 is lowered. For example, in Step S104 (refer to Fig. 5) of the above embodiment, the rotation speed of the compressor 31 is lowered by 5% with respect to the rotation speed at that time. However, when the elapsed time is shorter than the reference time, the controller 100 may lower the rotation speed of a compressor 31 by doubled 10%.

Moreover, in Step S104 of the above embodiment, the rotation speed of the compressor 31 is lowered, for example, by 5% with respect to the rotation speed at that time in 30 seconds. When the elapsed time is shorter than the reference time, the controller 100 may lower the rotation speed of the compressor 31, for example, by doubled 10% in 30 seconds.

Moreover, when the elapsed time is shorter than the predetermined reference time, the controller 100 may stop the compressor 31.

By virtue of the configuration as described above, the liquid level L within the tank 341 is detected in two stages story by detecting the liquid level L not only by the liquid level sensor 342 but by the lower liquid level sensor 345. Hence, the liquid level L of the liquid refrigerant RL within the tank 341 can be ascertained with high accuracy. Accordingly, a rise in the liquid level within the tank 341 can be restrained with high accuracy.

Additionally, in a case where the elapsed time is shorter than the predetermined reference time and the liquid level L of the liquid refrigerant RL within the tank 341 changes steeply, the percentage of a decrease in the rotation speed of the compressor 31 is increased, or the compressor 31 is stopped. Accordingly, in a case where the liquid level L of the liquid refrigerant RL within the tank 341 changes steeply, the liquid level L can be greatly lowered in correspondence with a rise in the liquid level L.

In addition, in the modification example of the above embodiment, the receiver 34 includes the liquid level sensor 342 and the lower liquid level sensor 345. However, the invention is not limited to this. For example, a liquid level sensor that detects the liquid level L may be further provided in addition to the liquid level sensor 342 and the lower liquid level sensor 345.

Although the embodiment of the invention has been described above in detail with reference to the drawings, the respective components, combinations thereof, or the like in the embodiment are exemplary. Additions, omissions, substitutions, and other modifications of the components can be made without departing from the spirit of the invention. Additionally, the invention is not limited by the embodiment, and is limited only by the scope of the claims.

For example, in the above embodiment and modification example, in the control of the controller 100, specific examples of the percentage in which the rotation speed of the compressor 31 is changed, and various kinds of time are shown. These are merely examples and can be appropriately changed.

Additionally, the control by the controller 100 is not limited to one exemplified above, and the processing order may be changed or some kinds of processing may be omitted.

Additionally, in the above embodiment, the controller 100 lowers the rotation speed of the compressor 31 in a predetermined percentage in a case where the liquid level sensor 342 detects that the liquid level L has reached the reference level Ls. However, the invention is not limited to this. The degree that the rotation speed of a compressor 31 is lowered may be more finely controlled in accordance with the state of the refrigerant, the outside air temperature, and the like. Additionally, the controller 100 may stop the compressor 31 in a case where the liquid level sensor 342 detects that the liquid level L has reached the reference level Ls.

Additionally, in the above embodiment, the refrigeration system 1 includes the plurality of loading apparatuses 2 and the condensing unit 3. However, the number of loading apparatuses 2 is not limited at all. It is obvious that the plurality of loading apparatuses 2 may not need to be of the same type, and a plurality of types of loading apparatuses 2 may be provided in a mixed manner.

Moreover, the refrigeration system 1 may be a unit having the loading apparatuses 2 and the condensing unit 3 integrally. As such a unit, there are, for example, vending machines for beverages or the like.

### Industrial Applicability

According to the above refrigeration device and refrigeration system, it is possible to restrain sending the liquid refrigerant into the compressor from the receiver while restraining a decrease in cooling capacity. Reference Signs List

- 1:: REFRIGERATION SYSTEM
- 2:: LOADING APPARATUS
- 3:: CONDENSING UNIT (REFRIGERATION DEVICE)
- 21:: HEAT EXCHANGER (LOAD-SIDE HEAT EXCHANGER)
- 22:: CONTROL VALVE (ADJUSTING VALVE)
- 23:: CONTROLLER
- 24:: TEMPERATURE SENSOR
- 31:: COMPRESSOR
- 31a:: FIRST COMPRESSION SECTION
- 31b:: SECOND COMPRESSION SECTION
- 32:: GAS COOLER (HEAT EXCHANGER)
- 33:: ELECTRONIC EXPANSION VALVE (EXPANSION VALVE)
- 34:: RECEIVER
- 35:: ACCUMULATOR
- 36:: ELECTROMAGNETIC VALVE
- 37:: TEMPERATURE SENSOR
- 38:: INJECTION CIRCUIT
- 39:: OIL SEPARATOR
- 100:: CONTROLLER
- 300:: REFRIGERANT PIPE
- 301:: LIQUID SENDING PIPE
- 302:: SUCTION PIPE
- 341:: TANK
- 342:: LIQUID LEVEL SENSOR
- 345:: LOWER LIQUID LEVEL SENSOR
- L:: LIQUID LEVEL
- Ls:: REFERENCE LEVEL
- Pa:: PRESSURE TARGET VALUE
- Pm:: PRESSURE LOWER LIMIT VALUE
- RG:: GAS REFRIGERANT
- RL:: LIQUID REFRIGERANT
- Rs:: STEADY ROTATION SPEED
- Ts:: SETUP TIME

## Claims

1. A refrigeration device comprising:
a compressor that compresses a refrigerant;
a heat exchanger that condenses the refrigerant compressed in the compressor;
an expansion valve that expands the refrigerant condensed in the heat exchanger;
a receiver that separates the refrigerant condensed in the expansion valve into a gas refrigerant and a liquid refrigerant;
an injection circuit that sends the gas refrigerant separated in the receiver to the compressor;
a liquid level sensor that detects that a liquid level of the liquid refrigerant stored within the receiver has reached a predetermined reference level; and
a controller that performs a control so as to lower a rotation speed of the compressor in a case where the liquid level sensor detects that the liquid level has reached the reference level.

2. The refrigeration device according to Claim 1,
wherein in a case where the liquid level sensor detects that the liquid level has reached the reference level, the controller performs a control so as to lower the rotation speed of the compressor in a predetermined percentage with respect to the rotation speed at the time of the detection.

3. The refrigeration device according to Claim 1 or 2,
wherein the controller further lowers the rotation speed of the compressor in a case where the liquid level is maintained in a state of having reached the reference level in the liquid level sensor when a predetermined setup time has elapsed since the rotation speed of the compressor is lowered.

4. The refrigeration device according to any one of Claims 1 to 3,
wherein the controller lowers the rotation speed of the compressor in a case where a pressure of the refrigerant to be supplied to the compressor is equal to or higher than a preset pressure target value and the liquid level sensor detects that the liquid level has reached the reference level.

5. The refrigeration device according to any one of Claims 1 to 4, further comprising:
a lower liquid level sensor, which detects the liquid level of the liquid refrigerant within the receiver, below the liquid level sensor,
wherein the controller lowers the rotation speed of the compressor on the basis of an elapsed time until the liquid level sensor detects that the liquid level has reached the reference level since the lower liquid level sensor detects the liquid level.

6. The refrigeration device according to Claim 5,
Wherein, when the elapsed time is shorter than a predetermined reference time, a percentage at which the rotation speed of the compressor is lowered is increased, or the compressor is stopped.

7. A refrigeration system comprising:
the refrigeration device according to any one of Claims 1 to 6; and
a loading apparatus that is connected to the refrigeration device and has a load-side heat exchanger that exchanges heat with the liquid refrigerant to be supplied from the refrigeration device.
